# FASCICULE DE BREVET EUROPEEN

(11) **EP 2 198 644 B1**
(45) Date de publication et mention de la délivrance du brevet: **11.02.2015**
(21) Numéro de dépôt: 08827654.8
(22) Date de dépôt: 18.07.2008
(51) Int. Cl.: H04W 24/10

(54) **MESURE RADIO DANS UN RESEAU DE RADIOCOMMUNICATION**
FUNKMESSUNG IN EINEM FUNKKOMMUNIKATIONSNETZ
RADIO MEASUREMENT IN A RADIO COMMUNICATION NETWORK

(30) Priorité: 20.08.2007 FR 0705915
(43) Date de publication de la demande: 23.06.2010
(73) Titulaire: Orange, 75015 Paris (FR)
(72) Inventeur: BEN HADJ ALAYA, Afef, F-92400 Courbevoie (FR); HOUZE, Paul, F-94200 Ivry Sur Seine (FR); BEN JEMAA, Sana, F-92130 Issy Les Moulineaux (FR)
(86) Numéro de dépôt international: PCT/FR2008/051365
(87) Numéro de publication internationale: WO 2009/024695

(56) Documents cités:
- EP-A- 0 431 956
- EP-A- 1 081 972
- EP-A- 1 424 863
- EP-A- 1 549 101
- WO-A-02/071780
- GB-A- 2 377 587

## Description

La présente invention concerne les mesures réalisées dans un réseau de radiocommunication.

La gestion des ressources radio dans un réseau de radiocommunication repose en général sur des mesures radio qui sont effectuées dans ce réseau. Une telle gestion de ressources radio peut être plus ou moins complexe et requérir des mesures radio de différents types.

On peut notamment prévoir de gérer l'interfonctionnement entre différents réseaux de radiocommunication, telle que par exemple la gestion de la mobilité d'un terminal depuis un réseau vers un autre réseau. Un tel interfonctionnement repose sur une gestion de ressources radio qui peut s'avérer être complexe et elle n'est efficace que si elle est basée sur des mesures radio pertinentes relatives aux différents réseaux considérés.

Outre la complexité d'une telle gestion de ressources radio, il convient de noter que le nombre des utilisateurs de réseaux de radiocommunication est en croissance. Pour satisfaire ces derniers, il est donc préférable que l'utilisation de ces ressources radio dans les réseaux soit optimisée.

A cet effet, il peut être prévu d'établir une cartographie d'interférence qui permet de déterminer le niveau d'interférence à un instant donné et en des localisations géographiques précises. A partir d'un tel niveau d'interférence, il est ensuite possible de déterminer l'utilisation réelle qui est faite du spectre des fréquences à un instant donné et en des localisations géographiques précises. La connaissance de l'utilisation réelle du spectre des fréquences permet alors d'optimiser l'utilisation du spectre de fréquence d'un réseau. En effet, on connaît ainsi les parties de ce spectre de fréquences qui ne sont pas utilisées à certains endroits et à un instant donné par les terminaux d'un réseau dit primaire. Il est alors possible d'en faire bénéficier des terminaux qui eux peuvent appartenir à un réseau de radiocommunication secondaire différent de ce réseau primaire, lorsqu'il est estimé qu'une telle utilisation des fréquences par le réseau secondaire ne perturbera pas le réseau primaire.

Une telle cartographie d'interférence permet également de détecter des problèmes dus à la propagation dans le réseau considéré, ou encore elle permet de détecter qu'un réseau voisin géographiquement du réseau considéré utilise les mêmes bandes de fréquences ou des bandes de fréquences adjacentes.

De telles mesures peuvent être effectuées dans le réseau par des terminaux. Il est ainsi prévu que les terminaux mobiles, appartenant à un réseau radio mobile terrestre tel qu'un réseau GSM (pour, en anglais, 'Global System for Mobile communications'), ou un réseau UMTS (pour en anglais 'Universal Mobile Télécommunication System') ou un réseau EDGE (pour, en anglais, 'Enhanced Data rates for GSM Evolution') ou encore de type WIMAX effectuent des mesures de manière périodique ou sur événement prédéfini dans le réseau considéré.

Un terminal mobile attaché à un réseau donné peut également effectuer des mesures sur d'autres réseaux voisins géographiquement de celui auquel il est attaché. En particulier, le réseau donné peut requérir auprès de ce terminal mobile d'effectuer des mesures sur un réseau voisin, dans le but de gérer une mobilité inter-réseaux. Le terminal mobile mesure alors un niveau de puissance ou encore estime un niveau de qualité relativement au canal pilote pour un certain nombre de stations de bases du réseau voisin, afin d'en choisir une en tant que cible potentielle pour une éventuelle mobilité inter-réseaux.

Les mesures inter-réseaux peuvent aussi être effectuées périodiquement, par exemple par les terminaux mobiles en mode veille, ou encore en `idle-mode', qui comparent de manière périodique le niveau de puissance ou le niveau de qualité pour le canal pilote de la station de base à laquelle le terminal mobile est attaché, par rapport aux stations de base qui lui sont voisines, et le cas échéant qui appartiennent à un autre réseau.

Cependant, effectuer des mesures radio au niveau des terminaux dans un réseau de télécommunication est une procédure coûteuse. En effet, la consommation d'énergie au niveau du terminal mobile est importante lors de l'exécution de ces mesures.

En outre, le résultat de ces mesures est transmis par les terminaux qui les ont effectuées aux stations de base du réseau. Ainsi, dans certains cas, une charge de signalisation importante peut être générée dans le réseau.

La demande de brevet EP-1 549101 divulgue un agencement de sondage comprenant un serveur central, et un ensemble de sondes à qui le serveur central peut demander de lui transmettre le résultat d'une mesure spécifiée. Chacune de ces sondes est apte à déterminer par ses propres moyens si elle est capable ou non d'effectuer cette mesure ; en cas de détermination positive, la sonde fait droit à la demande du serveur central.

La demande de brevet EP-1 424 863 divulgue un agencement de sondage comprenant un système de sondage, et un ensemble de dispositifs mobiles dont certains sont sélectionnés par ledit système de soudage afin qu'ils transmettent à un système de gestion de données le résultat d'une mesure spécifiée. La sélection d'un dispositif mobile prend en compte de préférence la position du dispositif mobile, de manière à ce que cette position se situe au sein de la zone où l'on souhaite effectuer la mesure. En outre, ou en variante, cette sélection peut prendre en compte des caractéristiques techniques des dispositifs mobiles.

La présente invention vient améliorer la situation.

Un premier aspect de la présente invention propose un procédé de mesure dans un réseau de radiocommunication (10) comprenant des terminaux (11) et une entité de réseau (12) ;
ledit procédé comprenant les étapes suivantes au niveau de l'entité de réseau :
/a/ déterminer (21) au moins un sous-ensemble de terminaux parmi les terminaux du réseau sur la base des distances entre les terminaux du réseau ;
/b/ envoyer un message requérant la mise en oeuvre d'une mesure à une partie au moins des terminaux dudit sous-ensemble ;
dans lequel une valeur représentant un niveau de capacité d'un terminal pour effectuer une mesure est associée à chaque terminal du sous-ensemble, et dans lequel les terminaux qui effectuent ladite mesure sont déterminés sur la base des valeurs qui leur sont respectivement associées.

Grâce à ces dispositions, on est en mesure d'effectuer des mesures pertinentes et efficaces tout en limitant les inconvénients induits par de telles mesures. En effet, on est alors capable, d'une part, de réduire la consommation globale en énergie des terminaux dans le réseau puisque seule une partie des terminaux du réseau est en charge d'effectuer la ou les mesures requises. D'autre part, on est en mesure de réduire la charge de signalisation dans le réseau relative à la transmission de ces mesures depuis les terminaux puisqu'un nombre réduit de terminaux transmettent le résultat de ces mesures à l'entité de réseau.

En outre les mesures restent pertinentes. En effet, les terminaux qui vont effectuer de telles mesures sont situés géographiquement de manière pertinente pour réaliser la mesure considérée car ils appartiennent tous à un sous-ensemble de terminaux qui a été déterminé sur la base des distances qui séparent les terminaux entre eux dans le réseau. On peut alors obtenir des valeurs de mesure pertinentes tout en limitant le nombre de terminaux qui vont effectuer de telles mesures.

Dans un mode de réalisation de la présente invention, on peut prévoir que la détermination des terminaux dans le sous-ensemble est réalisée sur la base de la comparaison des valeurs associées aux terminaux avec une valeur seuil de capacité. Il convient de noter ici que de préférence, dans ce cas, les terminaux auxquels sont associées des valeurs respectives inférieures à la valeur seuil n'effectuent pas la mesure. De ce fait, seuls les terminaux ayant une valeur de capacité supérieure à la valeur seuil effectuent la mesure requise.

Dans une alternative, on peut effectuer cette détermination sans utiliser une valeur seuil de capacité. Par exemple, si on souhaite qu'un nombre N de terminaux dans le sous-ensemble effectuent la mesure, on peut prévoir que les terminaux qui ont les N valeurs associées respectives les plus fortes vont effectuer la mesure. Ce mode de réalisation requiert une gestion centralisée de la détermination des terminaux qui vont effectuer la mesure.

L'étape consistant à déterminer au moins un sous-ensemble de terminaux peut être réalisée par la mise en oeuvre d'une méthode de partitionnement de données.

Ainsi, pour déterminer les sous-ensembles de terminaux, on peut avantageusement mettre en oeuvre une méthode de partitionnement de données, ou encore méthode de regroupement, telle que décrite dans le document 'Data Clustering : A Review' de A. K. Jain, M. N. Murty, P. J. Flynn, daté de 1999.

En procédant ainsi, on est en mesure de déterminer au sein du réseau des sous-ensembles de terminaux qui présentent une certaine homogénéité entre eux. En effet, la proximité géographique des terminaux induit des caractéristiques homogènes comme par exemple les valeurs des mesures radio effectuées par eux.

Un tel procédé de mesure peut en outre comprendre l'étape suivante entre l'étape /a/ et /b/ :
/i/ sélectionner au moins un terminal parmi les terminaux dudit sous- ensemble sur la base des valeurs associées ;
dans lequel à l'étape /b/, ledit message est envoyé audit terminal sélectionné.

Dans un tel mode de réalisation, les terminaux qui effectueront les mesures sont sélectionnés au niveau de l'entité de réseau. L'entité de réseau peut connaître les valeurs de capacité associées respectivement aux terminaux du sous-ensemble soit en les calculant elle-même, soit encore en les recevant depuis lesdits terminaux respectifs. En effet, on peut prévoir que ces valeurs soient déterminées au niveau de l'entité de réseau, ou bien qu'elles soient déterminées au niveau du terminal lui-même.

Dans un autre mode de réalisation, il est possible de prévoir que l'entité de réseau indique simplement une valeur seuil de capacité aux terminaux du sous-ensemble et que chacun de ces terminaux décide s'il effectue la mesure requise en fonction de cette valeur seuil indiquée.

Ainsi, le message requérant la mise en oeuvre d'une mesure indique la valeur seuil de capacité ; et
le procédé comprend les étapes suivantes effectuées au niveau d'un terminai :
/c/ recevoir un message requérant la mise en oeuvre d'une mesure ; et
/d/ décider d'effectuer la mesure requise si la valeur associée au terminal est supérieure à la valeur seuil de capacité.

En outre, avant l'étape consistant à déterminer au moins un sous-ensemble de terminaux, on peut mettre en oeuvre l'étape suivante :
- déterminer au moins une zone géographique de mesure dans le réseau de radiocommunication ;
le sous-ensemble de terminaux étant déterminé parmi les terminaux localisés dans ladite zone géographique déterminée.

En procédant ainsi, on peut déterminer plusieurs zones géographiques qui présentent plus ou moins d'intérêt en fonction des besoins du réseau. On peut alors déterminer des sous-ensembles de terminaux de préférence dans la zone ou les zones géographiques de mesure les plus intéressantes en fonction de la mesure à effectuer.

Dans ce contexte, une valeur de niveau de priorité représente la priorité avec laquelle il convient d'effectuer la mesure dans une zone géographique donnée. Une telle valeur peut être affectée à chacune des zones géographiques considérées ; et l'étape consistant à déterminer au moins un sous-ensemble de terminaux peut en outre être basée sur ces valeurs de niveau de priorité des zones géographiques de mesure.

Ainsi, il est notamment possible de prévoir que plus le niveau de priorité d'une zone géographique de mesure est élevé, plus le nombre de sous-ensembles dans la zone géographique de mesure déterminé est élevé et/ou plus le nombre de terminaux sélectionnés est élevé.

Lorsque le ou les terminaux sélectionnés sont adaptés pour effectuer une pluralité de types de mesure ;
ledit procédé comprenant en outre, avant l'étape consistant à déterminer au moins un sous-ensemble de terminaux, l'étape suivante :
- identifier un type de mesure à requérir auprès du terminal sélectionné parmi ladite pluralité de types de mesure.

Dans un mode de réalisation de la présente invention, les distances entre les terminaux du réseau sont déterminées au niveau des terminaux avant d'être transmises à l'entité de réseau.

Dans une alternative, les distances entre les terminaux du réseau peuvent être déterminées au niveau de l'entité de réseau sur la base d'informations de localisation obtenues par exemple par un système de localisation géographique par satellite ou par l'application d'une méthode de localisation telle qu'une méthode de différence de temps d'arrivée ou encore de triangulation. Une telle méthode peut être mise en oeuvre soit au niveau de l'entité de réseau, soit de manière externe à l'entité réseau, cette dernière recevant dans ce dernier cas les informations de localisation.

Aucune limitation n'est attachée à la présente invention relativement à la manière utilisée pour déterminer les distances entre les terminaux du réseau. On peut prévoir de mettre en oeuvre une méthode de géo-localisation par GSM (pour 'Global System for Mobile communications', en anglais), basée sur un identifiant IMEI (pour 'International Mobile Equipment Identify' en anglais), ou encore une identification par cellule dans un réseau GSM, basée sur un identifiant de cellule. On peut également appliquer des principes analogues à ceux du GSM dans un réseau UMTS (pour 'Universal Mobile Télécommunications System', en anglais). Dans les réseaux IP (pour `Internet Protocol') ou encore dans les réseaux Wi-Fi, il existe également des méthodes de positionnements bien connues de l'homme du métier qui pourraient avantageusement être mises en oeuvre dans le contexte d'un mode de réalisation de la présente invention.

La valeur représentant la capacité d'un terminal exprime le degré d'aptitude de ce terminal à effectuer des mesures.

Aucune limitation n'est attachée à la présente invention relativement à la méthode utilisée pour déterminée une valeur représentant une telle capacité. La capacité du terminal à effectuer une mesure peut être déterminée soit de manière centralisée dans le réseau, par une entité de réseau, soit par le terminal lui-même.

Dans le cas d'une détermination centralisée de la capacité du terminal, une entité de réseau détermine cette capacité en fonction par exemple de données relatives aux conditions dans lesquelles se trouve le terminal considéré, ces données pouvant être émisés depuis le terminal lui-même.

Ayant ainsi constitué des sous-ensembles de terminaux, et déterminé des capacités respectives pour ces terminaux, l'entité de réseau peut alors sélectionner les terminaux effectuant les mesures.

Dans le cas où la capacité d'un terminal est déterminée par le terminal lui-même, dans un mode de réalisation de la présente invention, cette capacité est alors transmise à l'entité de réseau qui sélectionne ensuite les terminaux destinés à effectuer les mesures sur la base de cette capacité.

Dans une alternative, on peut prévoir que la capacité du terminal n'est pas envoyée à l'entité de réseau mais que le terminal reçoit un message lui indiquant une valeur seuil de capacité au-delà de laquelle il effectuera la mesure considérée.

Ainsi, le terminal est adapté pour déterminer s'il effectue la mesure sur la base de la valeur de capacité qu'il a déterminée et d'informations envoyées par le réseau. Par exemple, le réseau envoie à des terminaux se trouvant dans une certaine zone géographique l'ordre d'effectuer des mesures, à la condition que leurs capacités soient au dessus d'un certain seuil.

Cette capacité ou aptitude à effectuer une mesure peut prendre une multitudes de paramètres reflétant les conditions de fonctionnement du terminal considéré. Elle peut dépendre par exemple d'un niveau d'autonomie en énergie dudit terminal et/ou d'un profil utilisateur du terminal et/ou de conditions de propagation dans lesquelles se trouve ledit terminal.

Les conditions de propagation peuvent notamment correspondre à la distance qui sépare le terminal considéré de l'entité de réseau avec laquelle il communique.

Un deuxième aspect de la présente invention propose un procédé de mesure dans un réseau de radiocommunication comprenant au moins un terminal ;
dans lequel une valeur représentant un niveau de capacité du terminal pour effectuer une mesure est associée audit terminal ;
ledit procédé comprenant les étapes suivantes effectuées au niveau d'un terminal :
/a/ recevoir un message requérant la mise en oeuvre d'une mesure, ledit message indiquant une valeur seuil de capacité ; et
/b/ décider d'effectuer la mesure requise si la valeur associée au terminal est supérieure à la valeur seuil de capacité.

Un troisième aspect de la présente invention propose une entité de réseau comprenant des moyens adaptés pour mettre en oeuvre un procédé de mesure selon le premier aspect de la présente invention.

Un quatrième aspect de la présente invention propose un terminal adapté pour coopérer avec l'entité de réseau selon le troisième aspect de la présente invention.

Le terminal peut comprendre une unité de détermination d'une valeur représentant un niveau de capacité d'un terminal pour effectuer une mesure.

Un cinquième aspect de la présente invention propose un réseau comprenant au moins une entité de réseau selon le troisième aspect de la présente invention et une pluralité de terminaux.

Un sixième aspect de la présente invention propose un programme d'ordinateur pour une entité de réseau, comprenant des instructions aptes à mettre en oeuvre le procédé selon le premier aspect de la présente invention, lors d'une exécution du programme par des moyens de traitement de l'entité de réseau.

Un septième aspect propose un programme d'ordinateur pour un terminal, comprenant des instructions aptes à mettre en oeuvre le procédé selon le deuxième aspect de la présente invention, lors d'une exécution du programme par des moyens de traitement dudit terminal.

D'autres aspects, buts et avantages de l'invention apparaîtront à la lecture de la description d'un de ses modes de réalisation.

L'invention sera également mieux comprise à l'aide des dessins, sur lesquels :
- la figure 1 illustre un réseau de radiocommunication selon un mode de réalisation de la présente invention ;
- les figures 2-A et 2-B illustrent les principales étapes d'un procédé de mesure selon des modes de réalisation de la présente invention ;
- la figure 3 illustre un réseau de radiocommunication découpé en zones géographiques de mesure selon un mode de réalisation de la présente invention ;
- la figure 4 illustre les étapes d'un procédé de mesure selon un autre mode de réalisation de la présente invention ;
- la figure 5 illustre un réseau de radiocommunication dans lequel sont gérés des paramètres de capacité pour les terminaux selon un mode de réalisation de la présente invention ;
- la figure 6 illustre une entité de réseau selon un mode de réalisation de la présente invention.

On entend par le terme 'mesure' par la suite, une mesure qui est relative à une ou plusieurs ressources radio dans le réseau considéré et qui peut être effectuée au niveau d'un terminal dans un réseau de radio communications, qu'il s'agisse d'un réseau de radio communications fixe ou bien encore mobile.

De telles mesures peuvent être de types différents et aucune limitation n'est attachée à la présente invention au regard du ou des types de mesure concernés. Ainsi, on peut prévoir par exemple que ces mesures peuvent être relatives au niveau de la qualité du signal reçu, ou encore être relatives à l'occupation, ou l'utilisation, d'une bande de fréquences.

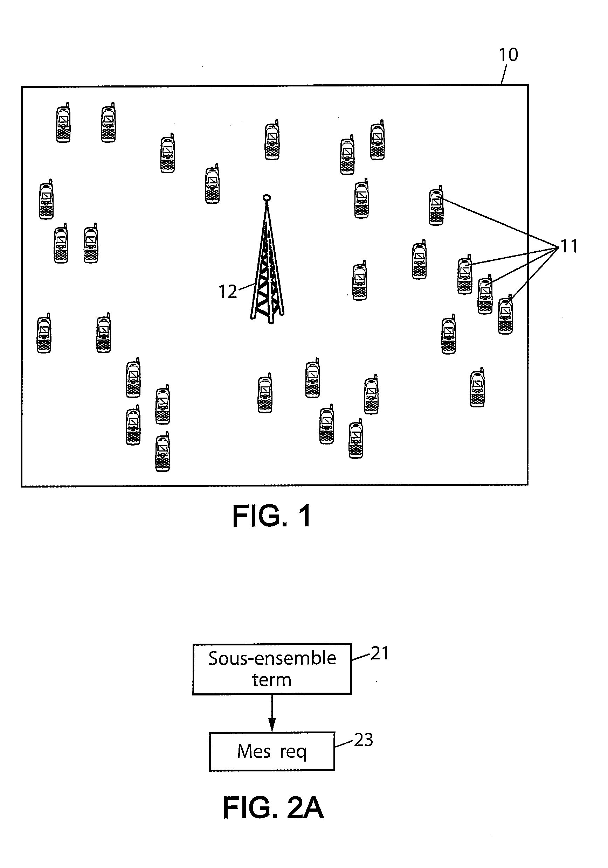

La figure 1 illustre un réseau de radiocommunication 10 selon un mode de réalisation de la présente invention. Ce réseau est une partie d'un réseau mobile, et comprend une pluralité de terminaux mobiles 11 et au moins une station de base 12. Le réseau mobile dont ce réseau 10 fait partie peut bien sûr comprendre une pluralité de stations de base 12 qui sont reliées entre elles par l'intermédiaire d'autres entités centrales de réseau.

Dans le contexte de la présente invention, le terme 'réseau' est à considérer au sens large, en tant qu'ensemble d'équipements qui sont reliés les uns aux autres afin de pouvoir échanger des informations. Un réseau dans un mode de réalisation de la présente invention comprend une entité de réseau qui est en charge de sélectionner les terminaux auprès desquels les mesures à effectuer vont être requises.

A titre d'exemple, le type de mesure radio à effectuer dans le réseau tel qu'illustré en figure 1, est relatif à une gestion de ressources radio en vue d'optimiser l'utilisation d'une bande de fréquences lorsque cette dernière n'est pas utilisée par les terminaux du réseau considéré en certains endroits et à certains moments.

Dans un mode de réalisation de la présente invention, le réseau 10 requiert des mesures radio qui lui fournissent des informations relatives à l'utilisation d'une bande de fréquences comprise entre une fréquence f₁ et une fréquence f₂, ou encore la bande de fréquences [f₁, f₂], à un instant donné, et pour une zone géographique donnée.

La figure 2-A illustre les principales étapes d'un procédé de mesure mis en oeuvre dans le réseau 10 selon un mode de réalisation de la présente invention.

A une étape 21, on détermine au moins un sous-ensemble de terminaux parmi les terminaux du réseau sur la base des distances entre les terminaux du réseau. Puis, à une étape 23, on envoie un message requérant la mise en oeuvre d'une mesure à une partie au moins des terminaux dudit sous-ensemble.

Les terminaux auxquels sont associées des valeurs supérieures à une valeur seuil de capacité effectuent ensuite la mesure.

Dans un mode de réalisation de la présente invention centralisé, une entité de réseau connait les valeurs de capacité qui sont associées aux terminaux du sous-ensemble et sur la base de ces valeurs, elle sélectionne les terminaux auprès desquels la mesure sera requise. Cette sélection peut être basée sur une comparaison des valeurs de capacité affectées aux terminaux avec une valeur seuil.

Dans un mode de réalisation de la présente invention décentralisé, l'entité de réseau peut envoyer un message à tous les terminaux du sous-ensemble. Puis, chaque terminal décide s'il effectue ou non la mesure sur la base de la comparaison de sa valeur de capacité avec la valeur seuil de capacité qui est indiquée dans le message reçu depuis l'entité de réseau.

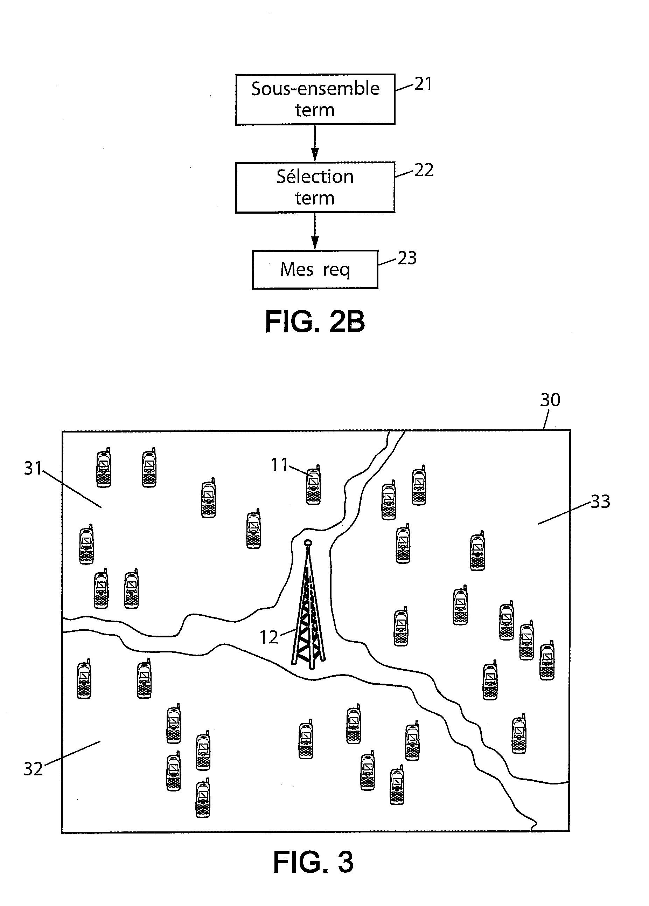

La figure 2-B illustre les principales étapes d'un procédé de mesure mis en oeuvre dans le réseau 10 selon un mode de réalisation de la présente invention qui est centralisé.

A une étape 21, un sous-ensemble de terminaux, parmi tous les terminaux qui sont compris dans le réseau considéré 10, ou encore attachés au réseau 10, est déterminé. Cette étape peut être effectuée au niveau d'une entité du réseau considéré, cette entité peut notamment correspondre à une station de base 12 dans le réseau 10.

Toutefois, aucune limitation n'est attachée à la présente invention au regard du type de l'entité 12 du réseau qui a la charge de déterminer ce sous-ensemble de terminaux dans le réseau. Elle peut être unique dans le réseau considéré ou encore on peut envisager que la détermination de ces sous-ensembles soit distribuée dans le réseau, sur plusieurs entités en fonction de l'architecture du réseau ou encore des dispositions géographiques relatives aux terminaux dans le réseau.

Cette étape visant à déterminer des sous-ensembles de terminaux peut avantageusement être basée sur les positions géographiques des terminaux ou plus précisément sur les distances qui séparent les terminaux 11 dans le réseau 10.

On peut procéder à une analyse statique relative aux terminaux, afin de former des sous-ensembles de terminaux présentant des propriétés communes. On peut utiliser une méthode de partitionnement de données en prenant en compte les distances qui séparent les différents terminaux.

Le partitionnement de données, ou 'data clustering' en anglais, est une méthode statique d'analyse de données qui permet de regrouper un ensemble de données, de manière générale, en différents groupes de données homogènes. Un groupe de données est considéré comme un groupe homogène lorsque les données de ce groupe partagent des caractéristiques communes.

Dans le contexte de l'utilisation d'une telle méthode de partitionnement selon un mode de réalisation de la présente invention, on peut définir un sous-ensemble de terminaux homogène sur la base de caractéristiques relatives à leur localisation géographique, et plus particulièrement en fonction de la distance entre les différents terminaux. Ainsi, l'homogénéité d'un sous-ensemble de terminaux peut reposer sur leur proximité géographique, puisque plus les terminaux sont proches géographiquement, plus les mesures radio effectuées fournissent des valeurs qui sont proches les unes des autres.

Puis, à une étape 22, le réseau, de manière centralisée ou distribuée, sélectionne parmi ce sous-ensemble de terminaux déterminé, les terminaux auxquels on va requérir d'effectuer les mesures radio.

Une telle sélection vise à permettre de disposer de valeurs de mesure radio pertinentes (répondant aux besoins du réseau en termes de mesures radio) tout en réduisant le nombre de terminaux effectuant cette mesure radio.

A cet effet, cette étape de sélection peut avantageusement être basée sur la capacité des terminaux du sous-ensemble à effectuer la mesure requise de sorte à sélectionner ceux qui sont le mieux adaptés pour effectuer la mesure. On peut prévoir d'affecter à chacun des terminaux une valeur d'un paramètre qui représente un niveau de capacité à réaliser la mesure. Une telle valeur peut être déterminée par le terminal ou encore par l'entité de réseau.

A une étape 23, la mesure radio est requise auprès des terminaux sélectionnés. Ainsi, les terminaux sélectionnés effectuent ensuite la mesure radio et, de ce fait, avantageusement, les autres terminaux sont dispensés d'effectuer cette mesure radio. Une telle caractéristique permet de réduire le trafic de signalisation dans le réseau 10 et la consommation d'énergie globale dans le réseau.

Dans un réseau de radiocommunication tel que celui qui est partiellement illustré en figure 1, une station de base 12 est en charge d'un ensemble de N terminaux mobiles, ces terminaux mobiles étant référencés {*Mₖ*}_{l≤*k*≤*N*} pour k nombre entier compris entre 0 et N.

Dans un mode de réalisation de la présente invention, la station de base a des informations de localisation géographique relativement aux N terminaux mobiles respectivement dont elle a la charge. De telles informations de localisation peuvent être obtenues par la station de base selon différentes méthodes.

Il est ainsi notamment possible d'utiliser un système de localisation géographique par satellite, ou GPS pour 'Global Positioning System' en anglais.

La station de base 12 peut également être adaptée pour effectuer une localisation géographique par exemple par la méthode de différence de temps d'arrivé, ou TDOA pour 'Time Difference Of Arrival' en anglais.

La localisation géographique du terminal {*Mₖ*}_{l≤*k*≤*N*} est référencée (*xₖ*, *yₖ*).

A partir de la localisation géographique des terminaux, la station de base 12 est ensuite apte à en déduire les distances respectives qui séparent les différents terminaux du réseau entre eux.

Il est aisé de déduire de ce mode de réalisation, un autre mode de réalisation dans lequel ce sont les terminaux 11 eux-mêmes qui déterminent les distances qui les séparent respectivement d'autres terminaux voisins dans le réseau.

Dans un mode de réalisation de la présente invention dans lequel on souhaite obtenir une cartographie d'interférence relative au réseau, la station de base 12 a besoin de mesures radio remontées par les terminaux 11 qui permettent de couvrir la zone géographique dont elle a la charge. Ces mesures radio correspondent dans l'exemple considéré à des mesures relatives à l'utilisation d'une bande voisine [f₁, f₂].

Il convient de noter que pour certains types de mesure, une localisation géographique peut être plus ou moins intéressante pour effectuer la mesure à un instant t.

Ainsi, par exemple, il peut être très important de connaître l'occupation de la bande [f₁, f₂] à une localisation géographique notée (x₀, y₀) à un instant *t*, alors que l'occupation de cette même bande à une autre localisation géographique (x₁, y₁) est moins utile pour la gestion du réseau à cet instant *t*.

L'utilité ou encore la pertinence d'effectuer une mesure à un endroit donné dans le réseau peut être représentée par un paramètre représentant un niveau de priorité, ou paramètre de pertinence.

Dans un mode de réalisation de la présente invention, le réseau 10 présente une certaine couverture géographique qui s'étend sur une zone géographique globale 30 autour de la station de base 12 comme cela est illustrée à la figure 3.

Afin de prendre en compte la pertinence des différentes localisations géographiques des terminaux du réseau, on peut avantageusement prévoir que cette zone géographique globale 30 soit découpée en une pluralité de zones géographiques de mesure ayant des niveaux de priorité de valeurs différentes.

Ainsi, on définit un nombre L de niveaux de priorité différents dans le réseau considéré, et on note {*iₗ*}_{l≤*l*≤*L*} un paramètre qui représente un niveau de priorité relatif à la mise en oeuvre d'une mesure dans le réseau. Plus la valeur de ce paramètre est élevée, plus la zone géographique de mesure auquel il est associé représente un intérêt important pour la mesure à effectuer pour le réseau.

La figure 3 illustre un exemple de délimitation des différentes zones géographiques de mesure du réseau 31, 32 et 33, respectivement affectées des valeurs de niveau de priorité i₁, i₂ et i₃, la valeur i₁ représentant la zone géographique la plus prioritaire et la valeur i₃ représentant la zone géographique la moins prioritaire.

Dans ces conditions, à un instant t considéré, il est plus pertinent d'effectuer la mesure requise dans la zone géographique de mesure 31 plutôt que dans les zones géographiques de mesure 32 et 33.

Il convient de noter qu'il peut être avantageux de prévoir d'effectuer un plus grand nombre de mesures dans des zones géographiques auxquelles sont affectées des valeurs de niveau de priorité plus élevées.

Dans chaque zone géographique de mesure, on détermine des sous-ensembles de terminaux parmi les terminaux situés dans la zone géographique de mesure considérée. Ensuite, on prévoit de sélectionner une partie des terminaux dans chaque sous-ensemble afin de requérir auprès d'eux la mise en oeuvre de la mesure souhaitée.

A cet effet, à l'intérieur de chaque zone géographique de mesure, on procède à une analyse statique relative aux terminaux situés dans la zone, afin de former des sous-ensembles de terminaux présentant des propriétés communes. A cet effet, il est possible d'utiliser une méthode de partitionnement de données en prenant en compte les distances qui séparent les différents terminaux dans la zone géographique concernée.

Dans le contexte de l'utilisation d'une telle méthode de partitionnement selon un mode de réalisation de la présente invention, on peut définir un sous-ensemble de terminaux homogène sur la base de caractéristiques relatives à leur localisation géographique, et plus particulièrement en fonction de la distance entre les différents terminaux. Ainsi, l'homogénéité d'un sous-ensemble de terminaux peut reposer sur leur proximité géographique, puisque plus les terminaux sont proches géographiquement, plus les mesures radio effectuées fournissent des valeurs qui sont proches les unes des autres.

On peut en outre prévoir de réaliser ce partitionnement en fonction de la zone géographique de mesure du réseau à laquelle appartient un terminal à un instant t. En effet, il est possible d'obtenir, en fonction du niveau de priorité associé à la zone géographique de mesure, un partitionnement plus ou moins fin. Ainsi, il peut être avantageux de prévoir un partitionnement très fin dans une zone géographique de mesure avec une valeur de niveau de priorité élevée afin d'obtenir dans cette zone un nombre de sous-ensembles de terminaux plus important que dans d'autres zones ayant une valeur de niveau de priorité inférieure.

Dans ces conditions, le nombre de terminaux sélectionnés au final pour effectuer les mesures peut être plus élevé dans une zone ayant une valeur de niveau de priorité importante que dans une zone ayant une valeur de niveau de priorité moindre.

Par ailleurs, dans un mode de réalisation de la présente invention, une valeur est affectée à chaque terminal pour représenter sa capacité à effectuer un type de mesure donné.

Cette valeur de capacité peut dépendre par exemple de l'état de sa batterie. En effet, il est préférable qu'un terminal ayant une batterie chargée effectue les mesures plutôt qu'un terminal qui a une faible autonomie en énergie.

Cette valeur de capacité peut également dépendre des conditions de propagation dans lesquelles le terminal considéré se trouve. Il est en effet, préférable de privilégier le fait que les mesures soient effectuées sur un terminal qui est proche de la station de base plutôt que sur un terminal qui en est très éloigné.

Cette valeur de capacité peut encore dépendre du profil de l'utilisateur du terminal, comme par exemple de certaines caractéristiques de son abonnement auprès de l'opérateur qui a en charge le réseau.

Les valeurs de capacité peuvent varier de façon dynamique au cours du temps et peuvent être fonction du type de mesure requis. Aucune limitation n'est attachée à la méthode utilisée et les caractéristiques prises en compte pour déterminer ces valeurs de capacité pour les terminaux.

Il est alors avantageux de prévoir qu'un terminal ayant une valeur de paramètre de capacité plus élevée qu'un autre terminal ait plus de chance d'être choisi par le réseau pour effectuer la mesure ou les mesures requises. Ce paramètre de capacité peut être un nombre compris entre 0 et 1, et noté pₖ où k est un nombre entier compris entre 1 et le nombre de terminaux dans un sous-ensemble considéré.

Ainsi, pour une valeur nulle du paramètre de capacité, le terminal n'est pas prédisposé à effectuer la mesure. En revanche pour une valeur égale à 1, le terminal est considéré comme apte à effectuer cette mesure.

On désigne par {S*_{d,l}*}_{l≤*l*≤*L*} un *d* ème sous-ensemble dans une zone géographique de mesure ayant une valeur de niveau de priorité *i*, où d est un nombre entier compris entre 1 et le nombre de terminaux dans la zone géographique de mesure compris et l un nombre compris entre 1 et une valeur L. On désigne par *{pₖ* }_{l≤*k*≤*N*} le paramètre de capacité représentant la capacité ou aptitude à effectuer la mesure pour le terminal *Mₖ*.

Puis, dans chaque sous-ensemble *S*_{*d* ,*l*}, les différentes valeurs de paramètre de capacité *pₖ* affectées à chaque terminal *Mₖ* peuvent être par exemple classées selon un ordre croissant. Le réseau peut alors choisir les terminaux les plus adaptés pour leur demander d'effectuer la mesure.

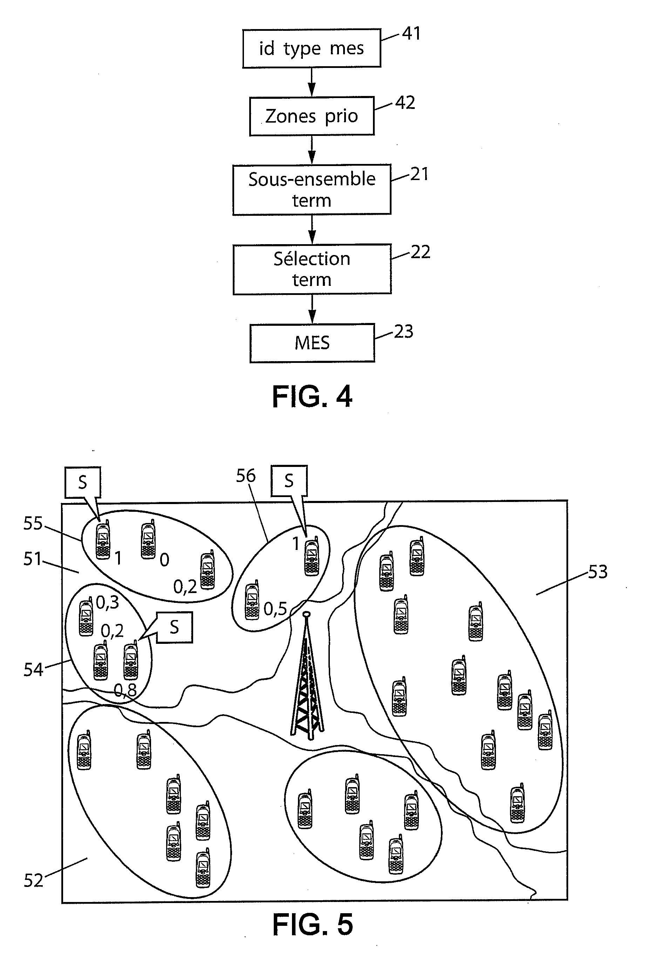

La figure 4 résume différentes étapes du procédé selon un mode de réalisation de la présente invention dans lequel la zone géographique du réseau considéré est découpée en plusieurs zones géographiques de mesure.

Ainsi, à une étape 41 on détermine le type de mesure à effectuer à un instant t. Puis, en fonction du type de mesure à effectuer, à une étape 42, on délimite une pluralité de zones géographiques de mesure en leur affectant des valeurs reflétant leur niveau de priorité relativement à la mesure à effectuer.

Ensuite, dans une étape 21, comme cela est décrit en référence à la figure 2, plusieurs sous-ensembles de terminaux sont formés au sein de chacune des différentes zones géographiques de mesure en mettant en oeuvre une méthode statistique comme une méthode de partitionnement de données basée sur des distances respectives entre les terminaux de la zone géographique de mesure considérée. Puis, au sein même de chacun des sous-ensemble de terminaux, en fonction de la capacité de chacun des terminaux, seule une partie des terminaux est sélectionnée pour la mise en oeuvre d'une mesure. A l'étape 23 la mesure est alors requise auprès des terminaux qui ont été sélectionnés à l'étape 22.

Ce procédé permet d'effectuer des mesures à un instant t donné de manière très pertinente. Dans un réseau de radiocommunication mobile, il apparait avantageux de réitérer ce procédé afin de sélectionner à nouveau les terminaux les mieux adaptés pour effectuer les mesures souhaitées. En effet, dans ces conditions, même pour un même type de mesure, les terminaux étant supposés se déplacer, la pertinence d'un lieu géographique n'est pas la même à différents instants de mesure (ainsi que les besoins du réseau en termes de mesures radio).

Dans un mode de réalisation de la présente invention, un tel procédé de mesure est mis en oeuvre dans le contexte de l'utilisation par un réseau secondaire de bandes de fréquences qui ne sont pas utilisées par le réseau primaire de spectre. Un terminal du réseau secondaire peut alors utiliser une bande de fréquences donnée normalement affectée au réseau primaire lorsque ce dernier ne l'utilise pas. En revanche, il est préférable de prévoir que, dès qu'un terminal du réseau primaire requiert l'utilisation de cette bande de fréquences, le terminal du réseau secondaire l'utilisant a en charge de la libérer. Une telle bande de fréquences pourra être par exemple la bande de radiodiffusion 470-830 MHz. Cette gestion des ressources radio peut se fonder sur des mesures relatives à la bande de fréquences considérée. Il peut ici être avantageux de mettre en oeuvre un procédé selon un mode de réalisation de la présente invention.

La figure 5 illustre un réseau comprenant des terminaux répartis dans différents sous-ensembles de terminaux de différentes zones géographiques de mesure. Plus précisément, sont ici illustrées trois différentes zones géographiques de mesure 51, 52 et 53 ayant respectivement des valeurs de niveau de priorité i₁, i₂ et i₃. La zone géographique de mesure 51 ayant la valeur de niveau de priorité i₁ la plus grande, cette zone géographique est privilégiée pour y effectuer des mesures sur l'utilisation de la bande de fréquences [f₁, f₂], afin de déterminer si cette bande de fréquences est libre ou non.

Dans la zone géographique 51 de mesure i₁, le réseau procède à l'étape 21 consistant à déterminer des sous-ensembles de terminaux homogènes par application d'une méthode de partitionnement de données en se basant sur la localisation géographique des terminaux considérés dans la zone géographique 51.

Dans la zone géographique de mesure 51 ayant un niveau de priorité i₁, trois sous-ensembles de terminaux, les sous-ensembles 54, 55 et 56, sont déterminés.

Dans chacun de ces sous-ensembles 54 à 56, le réseau sélectionne un ou plusieurs terminaux en fonction de ses capacités à effectuer la mesure souhaitée.

Le sous-ensemble 54 comprend un terminal présentant un paramètre de capacité égal à 0.2, un autre terminal avec un paramètre de capacité égal à 0.3 et un autre terminal avec un paramètre de capacité égal à 0.8.

Le sous-ensemble 55 comprend un terminal présentant un paramètre de capacité égal à 0, un autre terminal avec un paramètre de capacité égal à 0.2 et un autre terminal avec un paramètre de capacité égal à 1.

Le sous-ensemble 56 comprend un terminal présentant un paramètre de capacité égal à 0.5 et un autre terminal avec un paramètre de capacité égale à 1.

Ainsi, sur la base des valeurs de ces paramètres de capacité, le réseau est en mesure de sélectionner dans chacun de sous-ensembles, le ou les terminaux qui sont le mieux adaptés pour effectuer les mesures.

Alors, le réseau émet à destination des terminaux sélectionnés un ordre pour effectuer la mesure.

Cet ordre, ou encore message de requête, peut avantageusement préciser le type de mesure à effectuer, et le cas échéant, il peut spécifier la bande de fréquences à mesurer. D'autres informations peuvent être précisées aussi dans ce message. On peut par exemple indiquer si le terminal doit effectuer un traitement sur les mesures avant de les envoyer au réseau. Ces terminaux effectuent donc la mesure requise par le réseau et remontent au réseau un rapport de mesure contenant les valeurs relatives à ces mesures, ou de manière plus générale, les informations demandées par le réseau.

Les terminaux ayant été sélectionnés pour effectuer la mesure d'occupation de la bande [f₁, f₂] sont indiqués à la figure 5 par la référence s. Ainsi, cinq terminaux sont dispensés de mesures dans la zone ayant une valeur de niveau de priorité i₁ et seulement trois mobiles effectuent les mesures dans cette zone.

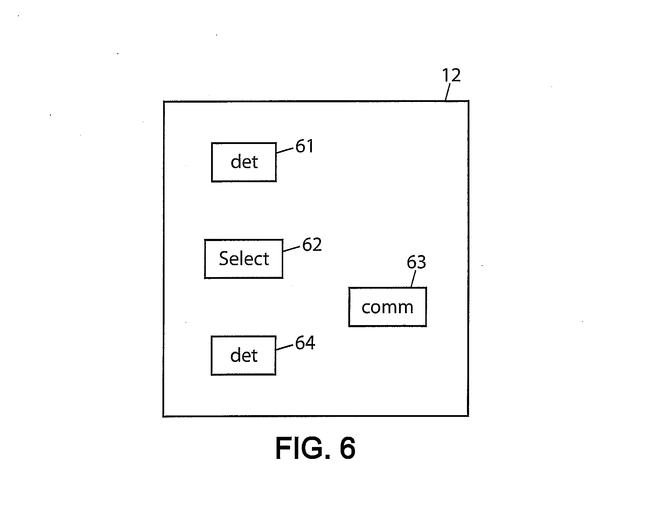

La figure 6 illustre, dans un mode de réalisation de la présente invention, une entité de réseau 12 comprenant une unité de détermination 61 adaptée pour déterminer au moins un sous-ensemble de terminaux parmi les terminaux du réseau sur la base des distances entre les terminaux du réseau. Elle comprend aussi une unité de commande 63 adaptée pour requérir la mesure auprès d'une partie au moins des terminaux dudit sous-ensemble.

Dans un mode de réalisation de la présente invention, elle comprend aussi une unité de sélection 62 adaptée pour sélectionner au moins un terminal parmi les terminaux dudit sous-ensemble sur la base de valeurs associées auxdits terminaux, lesdites valeurs représentant des niveaux de capacité respectifs des terminaux pour effectuer une mesure. Dans ce cas, l'unité de commande 63 peut être adaptée pour requérir la mesure auprès dudit terminal sélectionné ou des terminaux sélectionnés.

L'unité de détermination 61 peut aussi être adaptée pour mettre en oeuvre une méthode de partitionnement de données.

Cette unité de détermination 61 peut aussi être adaptée pour déterminer au moins une zone géographique de mesure dans le réseau de radiocommunication, le sous-ensemble de terminaux étant déterminé parmi les terminaux localisés dans ladite zone géographique déterminée.

Elle peut aussi en outre être adaptée pour affecter, respectivement à des zones géographiques de mesure, des valeurs de niveau de priorité pour effectuer la mesure ; et pour baser la détermination d'au moins un sous-ensemble de terminaux sur lesdites valeurs de niveau de priorité des zones géographiques de mesure.

Cette entité de réseau peut en outre comprendre une unité de détermination de distances 64 adaptée pour déterminer les distances entre les terminaux du réseau sur la base d'informations de localisation obtenues par exemple à partir d'un système de localisation géographique par satellite ou d'une une application d'une méthode de différence de temps d'arrivée.

## Revendications

1. Procédé de mesure dans un réseau de radiocommunication (10) comprenant des terminaux (11) et une entité de réseau (12) ;
ledit procédé comprenant les étapes suivantes au niveau de l'entité de réseau :
/a/ déterminer (21) au moins un sous-ensemble de terminaux parmi les terminaux du réseau ; et
/b/ envoyer à une partie au moins des terminaux dudit sous-ensemble un message requérant la mise en oeuvre d'une mesure ;
**caractérisé en ce que**, une valeur représentant un niveau de capacité d'un terminal pour effectuer une mesure étant associée à chaque terminal du sous-ensemble, les terminaux qui effectuent ladite mesure sont déterminés sur la base :
- des distances entre les terminaux du réseau, et
- d'une comparaison des valeurs qui leur sont respectivement associées avec une valeur seuil de capacité.

2. Procédé de mesure selon la revendication 1, comprenant en outre l'étape suivante au niveau de l'entité de réseau entre l'étape /a/ et /b/ :
/i/ sélectionner (22) au moins un terminal parmi les terminaux dudit sous-ensemble sur la base des valeurs associées ;
dans lequel à l'étape /b/, ledit message est envoyé audit terminal sélectionné.

3. Procédé de mesure selon l'une quelconque des revendications précédentes, comprenant en outre, avant l'étape consistant à déterminer au moins un sous-ensemble de terminaux, l'étape suivante :
- déterminer (42) au moins une zone géographique de mesure dans le réseau de radiocommunication ;
le sous-ensemble de terminaux étant déterminé parmi les terminaux localisés dans ladite zone géographique déterminée.

4. Procédé de mesure selon la revendication 3, dans lequel des valeurs de niveau de priorité représentant des niveaux de priorité pour effectuer la mesure sont respectivement affectées à des zones géographiques de mesure ; et
dans lequel l'étape consistant à déterminer au moins un sous-ensemble de terminaux est en outre basée sur les valeurs de niveau de priorité des zones géographiques de mesure.

5. Procédé de mesure selon la revendication 4, dans lequel plus la valeur de niveau de priorité d'une zone géographique de mesure est élevée, plus le nombre de sous-ensembles dans la zone géographique de mesure déterminée est élevé et/ou plus le nombre de terminaux effectuant la mesure est élevé.

6. Procédé de mesure selon l'une quelconque des revendications, dans lequel les terminaux sont adaptés pour effectuer une pluralité de types de mesure ;
ledit procédé comprenant en outre, avant l'étape consistant à déterminer au moins un sous-ensemble de terminaux, l'étape suivante :
- identifier (41) un type de mesure à requérir auprès des terminaux parmi ladite pluralité de types de mesure.

7. Procédé de mesure selon l'une quelconque des revendications précédentes, dans lequel la valeur représentant la capacité d'un terminal est fonction d'un niveau d'autonomie en énergie dudit terminal et/ou d'un profil utilisateur du terminal et/ou de conditions de propagation dans lesquelles se trouve ledit terminal.

8. Entité de réseau (12) dans un réseau de radiocommunication (10) comprenant en outre des terminaux (11);
ladite entité de réseau comprenant :
- une unité de commande (63) adaptée pour requérir une mesure auprès d'une partie au moins des terminaux d'au moins un sous-ensemble de terminaux parmi les terminaux du réseau ;
**caractérisée en ce qu'**elle comprend en outre :
- une unité de détermination (61) adaptée pour déterminer ledit au moins un sous-ensemble sur la base des distances entre les terminaux du réseau.

9. Entité de réseau selon la revendication 8, comprenant en outre une unité de sélection (62) adaptée pour sélectionner au moins un terminal parmi les terminaux du sous-ensemble sur la base de valeurs associées auxdits terminaux ; lesdites valeurs représentant des niveaux de capacité respectifs des terminaux pour effectuer la mesure.

10. Entité de réseau selon la revendication 8 ou 9, dans laquelle l'unité de détermination (61) est en outre adaptée pour déterminer au moins une zone géographique de mesure dans le réseau de radiocommunication ;
le sous-ensemble de terminaux étant déterminé parmi les terminaux localisés dans ladite zone géographique déterminée.

11. Entité de réseau selon la revendication 10, dans laquelle l'unité de détermination (61) est en outre adaptée pour affecter des valeurs de niveau de priorité représentant des niveaux de priorité pour effectuer la mesure respectivement à des zones géographiques de mesure ; et pour baser la détermination d'au moins un sous-ensemble de terminaux sur lesdites valeurs de niveau de priorité des zones géographiques de mesure.

12. Réseau de radiocommunication (10) comprenant au moins une entité de réseau (12) selon l'une quelconque des revendications 8 à 11 et une pluralité de terminaux (11).

13. Programme d'ordinateur pour une entité de réseau (12), comprenant des instructions aptes à mettre en oeuvre le procédé selon l'une quelconque des revendications 1 à 7 lors d'une exécution du programme par des moyens de traitement de ladite entité de réseau.

## Patentansprüche

1. Messverfahren in einem Funkverkehrsnetz (10), das Endgeräte (11) und eine Netzentität (12) enthält; wobei das Verfahren die folgenden Schritte im Bereich der Netzentität enthält:
/a/Bestimmen (21) mindestens einer Teileinheit von Endgeräten unter den Endgeräten des Netzes; und
/b/Senden einer Mitteilung an mindestens einen Teil der Endgeräte der Teileinheit, die eine Durchführung einer Messung anfordert;
**dadurch gekennzeichnet, dass**, da jedem Endgerät der Teileinheit ein einen Kapazitätspegel eines Endgeräts zur Durchführung einer Messung darstellender Wert zugeordnet ist, die die Messung durchführenden Endgeräte bestimmt werden auf der Basis von:
- den Entfernungen zwischen den Endgeräten des Netzes, und
- einem Vergleich der ihnen jeweils zugeordneten Werte mit einem Kapazitätsschwellwert.

2. Messverfahren nach Anspruch 1, das außerdem den folgenden Schritt im Bereich der Netzentität zwischen den Schritten /a/ und /b/ enthält:
/i/Auswahl (22) mindestens eines Endgeräts unter den Endgeräten der Teileinheit auf der Basis der zugeordneten Werte;
wobei im Schritt /b/ die Mitteilung an das ausgewählte Endgerät geschickt wird.

3. Messverfahren nach einem der vorhergehenden Ansprüche, das außerdem vor dem Schritt, der darin besteht, mindestens eine Teileinheit von Endgeräten zu bestimmen, den folgenden Schritt enthält:
- Bestimmen (42) mindestens einer geographischen Messzone im Funkverkehrsnetz;
wobei die Teileinheit von Endgeräten unter den in der bestimmten geographischen Zone befindlichen Endgeräten bestimmt wird.

4. Messverfahren nach Anspruch 3, wobei Prioritätsebenenwerte, die Prioritätsebenen zur Durchführung der Messung darstellen, jeweils geographischen Messzonen zugeordnet werden; und wobei der Schritt, der darin besteht, mindestens eine Teileinheit von Endgeräten zu bestimmen, außerdem auf den Prioritätsebenenwerten der geographischen Messzonen basiert ist.

5. Messverfahren nach Anspruch 4, wobei die Anzahl von Teileinheiten in der bestimmten geographischen Messzone umso größer und/oder die Anzahl von die Messung durchführenden Endgeräten umso größer ist, je höher der Prioritätsebenenwert einer geographischen Messzone ist.

6. Messverfahren nach einem der vorhergehenden Ansprüche, wobei die Endgeräte geeignet sind, eine Vielzahl von Messarten auszuführen;
wobei das Verfahren außerdem vor dem Schritt, der darin besteht, mindestens eine Teileinheit von Endgeräten zu bestimmen, den folgenden Schritt enthält:
- Erkennen (41) einer bei den Endgeräten unter der Vielzahl von Messarten anzufordernden Messart.

7. Messverfahren nach einem der vorhergehenden Ansprüche, wobei der die Kapazität eines Endgeräts darstellende Wert von einem Energieautonomiepegel des Endgeräts und/oder von einem Benutzerprofil des Endgeräts und/oder von Ausbreitungsbedingungen abhängt, in denen sich das Endgerät befindet.

8. Netzentität (12) in einem Funkverkehrsnetz (10), die außerdem Endgeräte (11) enthält;
wobei die Netzentität enthält:
- eine Steuereinheit (63), die geeignet ist, bei mindestens einem Teil der Endgeräte mindestens einer Teileinheit von Endgeräten unter den Endgeräten des Netzes eine Messung anzufordern;
**dadurch gekennzeichnet, dass** sie außerdem enthält:
- eine Bestimmungseinheit (61) die geeignet ist, die mindestens eine Teileinheit auf der Basis der Entfernungen zwischen den Endgeräten des Netzes zu bestimmen.

9. Netzentität nach Anspruch 8, die außerdem eine Auswahleinheit (62) enthält, die geeignet ist, mindestens ein Endgerät unter den Endgeräten der Teileinheit auf der Basis von den Endgeräten zugeordneten Werte auszuwählen; wobei die Werte jeweilige Kapazitätspegel der Endgeräte zur Ausführung der Messung darstellen.

10. Netzentität nach Anspruch 8 oder 9, wobei die Bestimmungseinheit (61) außerdem geeignet ist, mindestens eine geographische Messzone im Funkverkehrsnetz zu bestimmen;
wobei die Teileinheit von Endgeräten unter den Endgeräten bestimmt wird, die sich in der bestimmten geographischen Zone befinden.

11. Netzentität nach Anspruch 10, wobei die Bestimmungseinheit (61) außerdem geeignet ist, Prioritätsebenenwerte, die Prioritätsebenen zur Ausführung der Messung darstellen, jeweils geographischen Messzonen zuzuweisen; und die Bestimmung mindestens einer Teileinheit von Endgeräten auf den Prioritätsebenenwerten der geographischen Messzonen zu basieren.

12. Funkverkehrsnetz (10), das mindestens eine Netzentität (12) nach einem der Ansprüche 8 bis 11 und eine Vielzahl von Endgeräten (11) enthält.

13. Computerprogramm für eine Netzentität (12), das Anweisungen enthält, die das Verfahren nach einem der Ansprüche 1 bis 7 bei einer Ausführung des Programms durch Verarbeitungseinrichtungen der Netzentität anwenden können.

## Claims

1. Method of measurement in a radio communication network (10) comprising terminals (11) and a network entity (12);
said method comprising the following steps at the network entity:
/a/ determining (21) at least one sub-set of terminals among the terminals of the network; and
/b/ sending a message requesting the implementation of a measurement to a part at least of the terminals of said sub-set;
**characterized in that**, a value representing a level of capability of a terminal to carry out a measurement being associated with each terminal of the sub-set, the terminals that carry out said measurement are determined on the basis:
- of the distances between the terminals of the network, and
- of a comparison of the values that are respectively associated with them with a threshold capability value.

2. Method of measurement according to Claim 1, furthermore comprising the following step at the network entity between the steps /a/ and /b/:
/i/ selecting (22) at least one terminal among the terminals of said sub-set on the basis of the associated values;
in which in the step /b/, said message is sent to said selected terminal.

3. Method of measurement according to any one of the preceding claims, furthermore comprising, before the step consisting in determining at least one sub-set of terminals, the following step:
- determining (42) at least one geographical area of measurement in the radio communication network;
the sub-set of terminals being determined among the terminals located in said determined geographical area.

4. Method of measurement according to Claim 3, in which priority level values representing levels of priority for carrying out the measurement are respectively assigned to geographical areas of measurement; and
in which the step consisting in determining at least one sub-set of terminals is furthermore based on the priority level values of the geographical areas of measurement.

5. Method of measurement according to Claim 4, in which the higher the priority level value of a geographical area of measurement, the higher the number of sub-sets in the determined geographical area of measurement and/or the higher the number of terminals carrying out the measurement.

6. Method of measurement according to any one of the preceding claims, in which the terminals are adapted to carry out a plurality of types of measurement;
said method furthermore comprising, before the step consisting in determining at least one sub-set of terminals, the following step:
- identifying (41) a type of measurement to be requested of the terminals among said plurality of types of measurement.

7. Method of measurement according to any one of the preceding claims, in which the value representing the capability of a terminal is a function of a level of energy reserve of said terminal and/or of a user profile of the terminal and/or of propagation conditions in which said terminal is found.

8. Network entity (12) in a radio communication network (10) furthermore comprising terminals (11);
said network entity comprising:
- a command unit (63) adapted to request a measurement from a part at least of the terminals of at least one sub-set of terminals among the terminals of the network;
**characterized in that** it furthermore comprises:
- a determination unit (61) adapted to determine said at least one sub-set on the basis of the distances between the terminals of the network.

9. Network entity according to Claim 8, furthermore comprising a selection unit (62) adapted to select at least one terminal among the terminals of the sub-set on the basis of values associated with said terminals; said values representing respective levels of capability of the terminals to carry out the measurement.

10. Network entity according to Claim 8 or 9, in which the determination unit (61) is furthermore adapted to determine at least one geographical area of measurement in the radio communication network;
the sub-set of terminals being determined among the terminals located in said determined geographical area.

11. Network entity according to Claim 10, in which the determination unit (61) is furthermore adapted to assign priority level values representing levels of priority for carrying out the measurement, with respect to geographical areas of measurement; and to base the determination of at least one sub-set of terminals on said priority level values of the geographical areas of measurement.

12. Radio communication network (10) comprising at least one network entity (12) according to any one of Claims 8 to 11 and a plurality of terminals (11).

13. Computer program for a network entity (12), comprising instructions suitable for implementing the method according to any one of Claims 1 to 7 during an execution of the program by processing means of said network entity.
